# EUROPEAN PATENT SPECIFICATION

(11) **EP 4 459 226 B1**
(45) Date of publication and mention of the grant of the patent: **10.06.2026**
(21) Application number: 24161654.9
(22) Date of filing: 06.03.2024
(51) Int. Cl.: G01C 5/06

(54) **CUMULATIVE ALTITUDE CALCULATION DEVICE, CUMULATIVE ALTITUDE CALCULATION METHOD, AND PROGRAM**
KUMULATIVE HÖHENBERECHNUNGSVORRICHTUNG, KUMULATIVES HÖHENBERECHNUNGSVERFAHREN UND PROGRAMM
DISPOSITIF DE CALCUL D'ALTITUDE CUMULATIVE, PROCÉDÉ DE CALCUL D'ALTITUDE CUMULATIVE ET PROGRAMME

(30) Priority: 09.03.2023 JP 2023037008
(43) Date of publication of application: 06.11.2024
(73) Proprietor: Casio Computer Co., Ltd., Tokyo 151-8543 (JP)
(72) Inventor: KUWATA, Masahiro, Tokyo, 205-8555 (JP)
(74) Representative: Plougmann Vingtoft a/s

(56) References cited:
- US-A- 4 694 694
- US-B2- 10 036 637

## Description

The present disclosure relates generally to a cumulative altitude calculation device, a cumulative altitude calculation method, and a program.

As described in Unexamined Japanese Patent Application Publication No. 2001-289632, for example, a portable altimeter is known in the related art that acquires atmospheric pressure data from a pressure sensor that measures atmospheric pressure, and calculates the altitude of the current location by converting the atmospheric pressure to altitude. In actuality, there are influences such as the atmospheric pressure changing due to the climate and, consequentially, it is unlikely that an accurate value can be obtained by converting atmospheric pressure data to altitude without any sort of modifications. To address this, a method is known for estimating, as the altitude of the current location, a cumulative altitude obtained by sequentially adding, to the elevation at a reference location, slight altitude difference values obtained from atmospheric pressure data that changes from moment to moment.

The portable altimeter disclosed in the publication described above is determined to be in a moving state when an amount of altitude change is great, and in a stationary state when the amount of altitude change is small and, when in the moving state, adds the altitude difference value and updates the cumulative altitude to estimate the altitude of the current location.

US 4 694 694 A discloses an altimeter device employs a solid state pressure sensor having a strain-sensitive element directly in a silicon diaphragm, which is connected at one side to a closed vacuum chamber. The entire device is very compact and may be in the form of a wristwatch. A display indicates altitude or relative altitude above or below a reference point to the user, and electronics associated with the device provide for accumulation of vertical change in one direction, regardless of intervening changes in the opposite direction. In this way, a skier, hiker or biker, for example, may determine total vertical drop or vertical rise encountered in a selected period, without regard to offset from movements in the opposite direction. At the same time, the user may also determine his altitude at any given point, and in a preferred form the altimeter device includes a clock and a time-averaging feature, for calculating and displaying rate of climb or descent, both instantaneous and average over a selected interval. The device may also have a time display, so that it functions as a wristwatch as well as an altimeter, and a synthesized voice output may be included for reporting data to the user's ear when visual observation of the display is not practical.

US 10 036 637 B2 discloses a portable electronic device includes a notification unit which notifies a user of information regarding a cumulative increase amount from a current point to a target point in a route designated in advance, or information regarding a cumulative decrease amount from the current point to the target point.

The present invention solves the problem by providing a cumulative altitude calculation device according to claim 1, a cumulative altitude calculation method according to claim 8, and a program according to claim 11.

Further features of the present invention will become apparent from the following description of exemplary embodiments (with reference to the attached drawings).

A more complete understanding of this application can be obtained when the following detailed description is considered in conjunction with the following drawings, in which:
FIG. 1 is a drawing illustrating the hardware configuration of a wristwatch according to some embodiments;
FIG. 2A is a drawing illustrating an example of changes over time of an atmospheric pressure value in a first state;
FIG. 2B is a drawing illustrating an example of changes over time of the atmospheric pressure value in a second state;
FIG. 3 is a drawing illustrating the functional configuration of a cumulative altitude calculation device according to some embodiments;
FIG. 4 is a flowchart illustrating cumulative altitude calculation processing according to some embodiments;
FIG. 5 is a drawing illustrating a first altitude change table;
FIG. 6 is a drawing illustrating a second altitude change table;
FIG. 7 is a flowchart illustrating first calculation processing according to some embodiments;
FIG. 8 is a flowchart illustrating continuous altitude change calculation processing according to some embodiments;
FIG. 9 is a flowchart illustrating second calculation processing according to some embodiments;
FIG. 10 is a flowchart illustrating state determination processing according to some embodiments;
FIG. 11 is a flowchart illustrating integration processing according to Embodiment 1; and
FIG. 12 is a flowchart illustrating integration processing according to Embodiment 2.

Hereinafter, a wristwatch 1 and a cumulative altitude calculation device 100 according to embodiments of the present disclosure are described in detail while referencing the drawings. However, the following embodiments are presented for the purpose of explanation and should not be construed as limiting the scope of the invention of the present disclosure. Therefore, embodiments in which some elements or all elements of these embodiments are replaced with equivalent elements by one skilled in the art can also be employed, and such embodiments are also included within the scope of the present disclosure.

### Embodiment 1

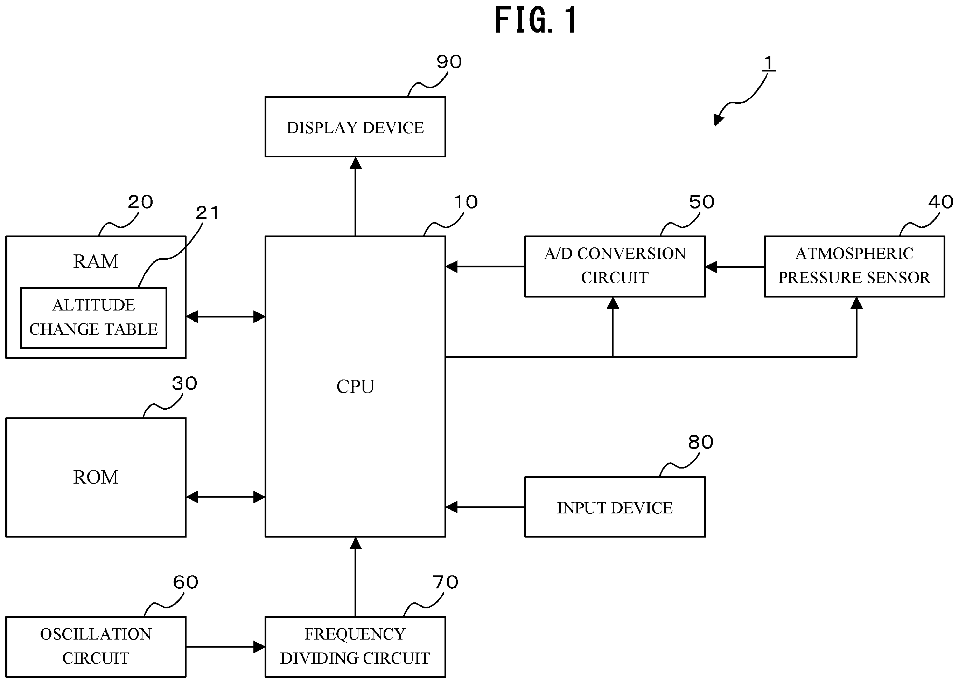

A wristwatch 1 according to Embodiment 1 includes an atmospheric pressure sensor. The wristwatch 1 estimates an elevation of a current location from acquired atmospheric pressure data and provides the estimated elevation of the current location to a user by displaying the estimated elevation on a display. As illustrated in FIG. 1, the wristwatch 1 includes a CPU 10, a RAM 20, a ROM 30, an atmospheric pressure sensor 40, an A/D conversion circuit 50, an oscillation circuit 60, a frequency dividing circuit 70, an input device 80, and a display device 90. These components are connected to each other via a non-illustrated bus. Additionally, the wristwatch 1 includes a non-illustrated wristband and the like.

A cumulative altitude calculation device 100 is a device that is realized by the CPU 10 and the like of the wristwatch 1. The cumulative altitude calculation device 100 converts the acquired atmospheric pressure data to altitude data, and calculates the altitude of the current location.

The CPU 10 is a central processing unit (CPU) that carries out the overall control of the wristwatch 1. The CPU 10 executes a program stored in the ROM 30 to realize the various functions of the cumulative altitude calculation device 100.

The RAM 20 is random access memory (RAM) into which the program is loaded from the ROM 30, and is used as the working area of the CPU 10. Additionally, an altitude change table 21, in which the altitude data that is converted from the atmospheric pressure data is stored, is retained in the RAM 20. The ROM 30 is read-only memory (ROM) that stores programs required for the CPU 10 to operate, and various types of data to be used in processing.

The atmospheric pressure sensor 40 is an atmospheric pressure sensor such as a piezoresistive barometer or the like, and measures an atmospheric pressure value in accordance with instructions from the CPU 10. In accordance with instructions from the CPU 10, the A/D conversion circuit 50 converts the atmospheric pressure value measured by the atmospheric pressure sensor 40 to digital data, and sends the converted digital data to the CPU 10.

The oscillation circuit 60 and the frequency dividing circuit 70 are components for supplying a clock signal having a constant clock frequency to the CPU 10. This clock signal is used to measure the time by counting a number of rises of a clock pulse by software processing executed by the CPU 10.

The input device 80 is a switch or the like that receives commands from the user. The display device 90 may be a liquid crystal display, an organic electro luminescence (EL) display, or the like, or a capacitive touch panel or the like in which a touch pad, namely the input device 80, is integrated.

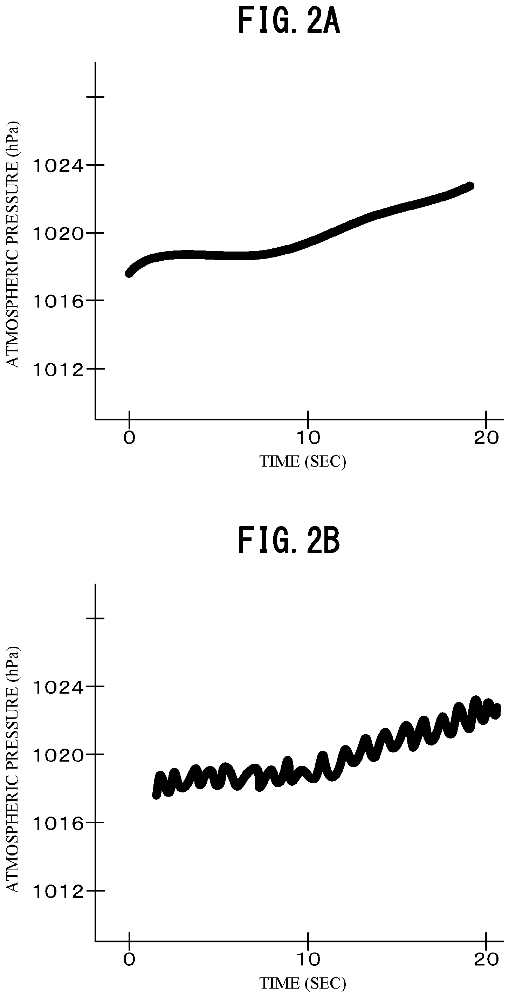

The cumulative altitude calculation device 100 realized by the CPU 10 and the like of the wristwatch 1 acquires the atmospheric pressure value measured by the atmospheric pressure sensor 40, and smooths the acquired atmospheric pressure value with an intensity corresponding to an amount of noise included in the changes over time of the atmospheric pressure value. For example, as illustrated in FIG. 2A, in a case in which atmospheric pressure data that changes gradually is obtained, the cumulative altitude calculation device 100 smooths the atmospheric pressure data with a small intensity, Conversely, as illustrated in FIG. 2B, in a case in which atmospheric pressure data with a large amount of noise is obtained, the cumulative altitude calculation device 100 smooths the atmospheric pressure data with a large intensity. Then, the cumulative altitude calculation device 100 estimates the altitude of the current location on the basis of the smoothed atmospheric pressure data.

Here, the phrase "the intensity of the smoothing is small" means that the cutoff frequency in the low-pass filter is high, and the phrase "the intensity of the smoothing is large" means that the cutoff frequency is low.

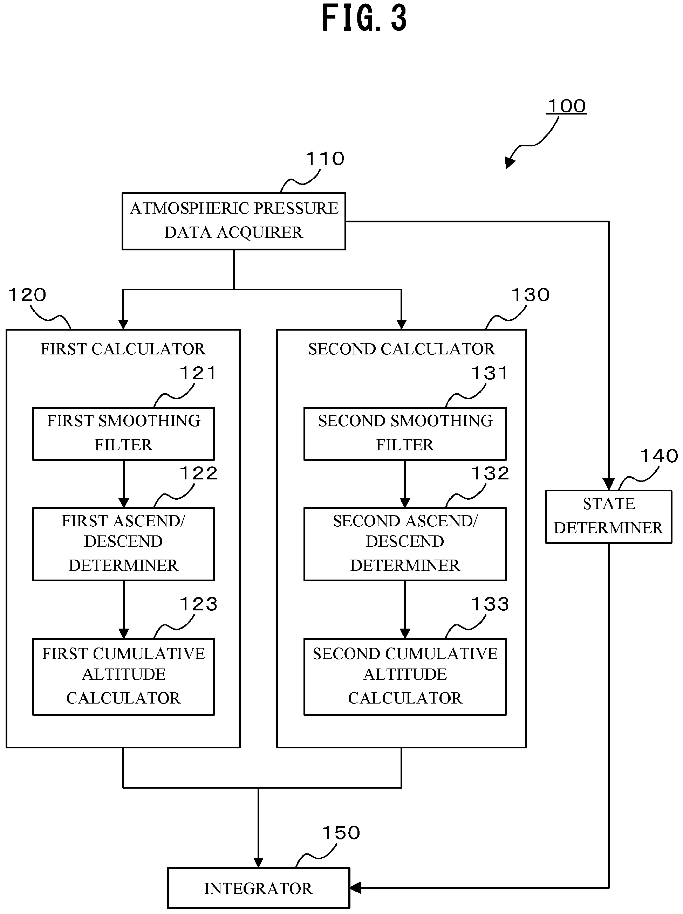

As illustrated in FIG. 3, the cumulative altitude calculation device 100 includes an atmospheric pressure data acquirer 110 that acquires the atmospheric pressure data from the atmospheric pressure sensor 40, a first calculator 120 that calculates a cumulative altitude from the atmospheric pressure data smoothed with the small intensity, a second calculator 130 that calculates the cumulative altitude from the atmospheric pressure data smoothed with the large intensity, a state determiner 140 that determines a current noise state, and an integrator 150 that uses the cumulative altitude corresponding to the noise state.

The atmospheric pressure data acquirer 110 includes the CPU 10, the A/D conversion circuit 50, and the like, and acquires the atmospheric pressure data from the atmospheric pressure sensor 40.

The first calculator 120 calculates a first cumulative altitude from the atmospheric pressure data acquired from the atmospheric pressure sensor 40. The term "cumulative altitude" refers to an altitude obtained by sequentially adding, to an elevation of a reference location, an altitude difference value calculated every predetermined period.

The first calculator 120 includes a first smoothing filter 121 that smooths the atmospheric pressure data with a first intensity, a first ascend/descend determiner 122 that determines an ascend/descend direction in a first period every predetermined cycle, and a first cumulative altitude calculator 123 that calculates an ascend/descend difference value in the predetermined cycle and calculates the first cumulative altitude on the basis of the ascend/descend direction and the ascend/descend difference value. The first smoothing filter 121 is a desired low-pass filter or the like. The first period is a period for calculating the ascend/descend direction every predetermined cycle, such as one clock, in order for the first calculator 120 to calculate the first cumulative altitude from the atmospheric pressure data.

The second calculator 130 calculates a second cumulative altitude from the atmospheric pressure data acquired from the atmospheric pressure sensor 40. The second calculator 130 includes a second smoothing filter 131 that smooths the atmospheric pressure data with a second intensity, a second ascend/descend determiner 132 that determines the ascend/descend direction in a second period every predetermined cycle, and a second cumulative altitude calculator 133 that calculates the ascend/descend difference value in the predetermined cycle and calculates the second cumulative altitude on the basis of the ascend/descend direction and the ascend/descend difference value. The second smoothing filter 131 is a desired low-pass filter or the like. The second period is a period for calculating the ascend/descend direction every predetermined cycle in order for the second calculator 130 to calculate the second cumulative altitude from the atmospheric pressure data. Here, the second intensity is greater than the first intensity, and the second period is greater than the first period.

The state determiner 140 determines, from the atmospheric pressure data acquired from the atmospheric pressure sensor 40, whether the current state is a first state or a second state. Here, the first state is a state in which the amount of noise included in the changes over time of the atmospheric pressure value is small, and the second state is a state in which the amount of noise is great. When the amount of noise included in the atmospheric pressure data is less than a predetermined reference, the state determiner 140 determines that the current state is the first state, and when the amount of noise included in the atmospheric pressure data is greater than the predetermined reference, the state determiner 140 determines that the current state is the second state.

The integrator 150 derives the cumulative altitude in accordance with the state determined by the state determiner 140, on the basis of the first cumulative altitude and the second cumulative altitude.

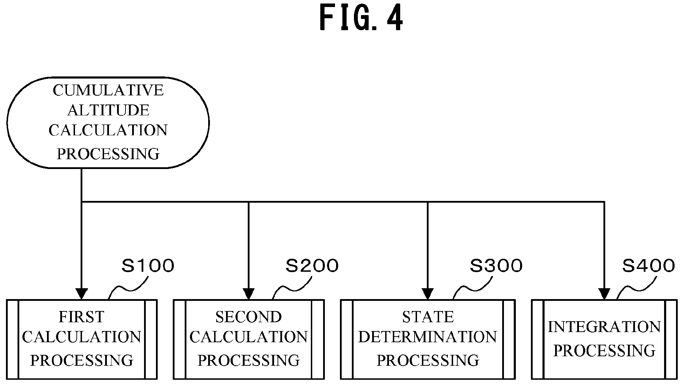

FIG. 4 is a flowchart for explaining cumulative altitude calculation processing executed by the cumulative altitude calculation device 100. The cumulative altitude calculation processing is processing for estimating the altitude of the current location by calculating, from the atmospheric pressure data acquired from the atmospheric pressure sensor 40, the cumulative altitude up to the current location.

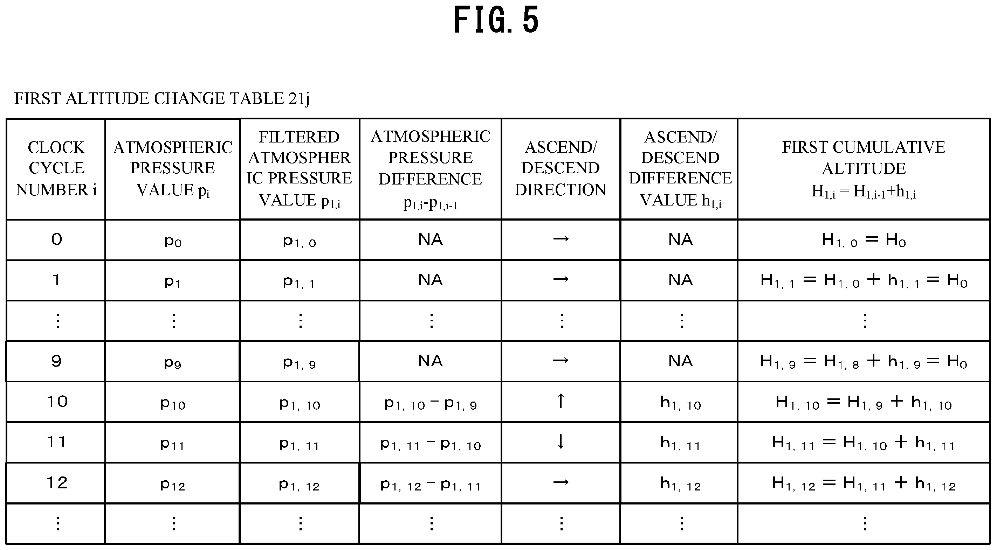

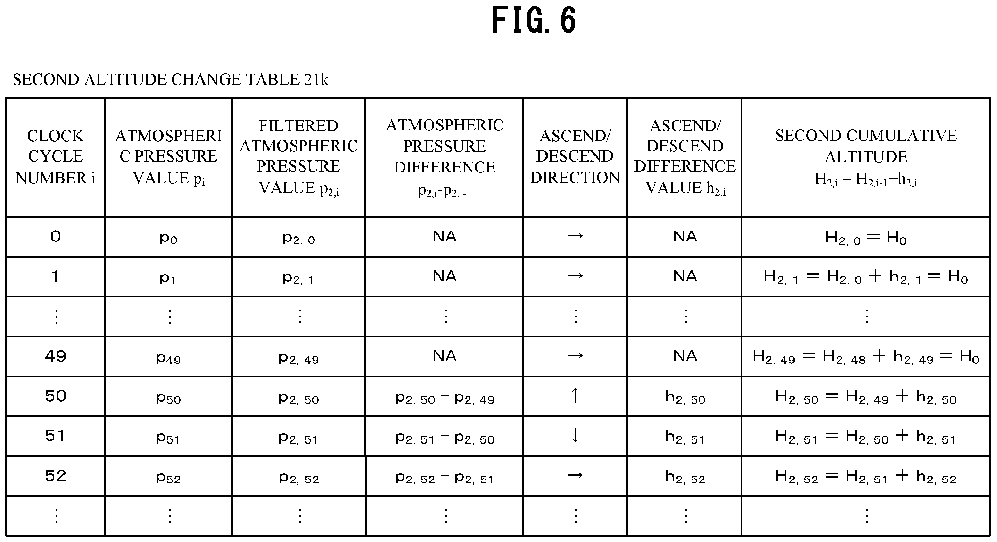

The cumulative altitude calculation processing starts when the user operates the input device 80 of the wristwatch 1 to input the elevation of the current location (or the ascend/descend altitude up to that location) H₀. When the cumulative altitude calculation processing starts, the cumulative altitude calculation device 100 firstly stores an initial state in the altitude change table 21 retained in the RAM 20. Specifically, the cumulative altitude calculation device 100 sets an atmospheric pressure value p₀, an elevation H₀, and the like from when the clock cycle number i = 0 and the elevation H₀ is input, such as illustrated in the 1st row of a first altitude change table 21j illustrated in FIG. 5. Additionally, the cumulative altitude calculation device 100 sets the atmospheric pressure value p₀, the elevation H₀, and the like from when the clock cycle number i = 0 and the elevation H₀ is input, such as illustrated in the 1^{st} row of a second altitude change table 21k illustrated in FIG. 6. Moreover, the atmospheric pressure value p₀ is substituted into the i = 0^{th} atmospheric pressure value p_{1,0} after smoothing with the first smoothing filter 121, and the i = 0^{th} atmospheric pressure value p_{2,0} after smoothing with the second smoothing filter 131.

Returning to FIG. 4, next, first calculation processing (step S100), second calculation processing (step S200), state determination processing (step S300), and integration processing (step S400) are each started. These processings end when, for example, the user operates the input device 80 and enters a command into the cumulative altitude calculation device 100 for stopping the cumulative altitude calculation processing.

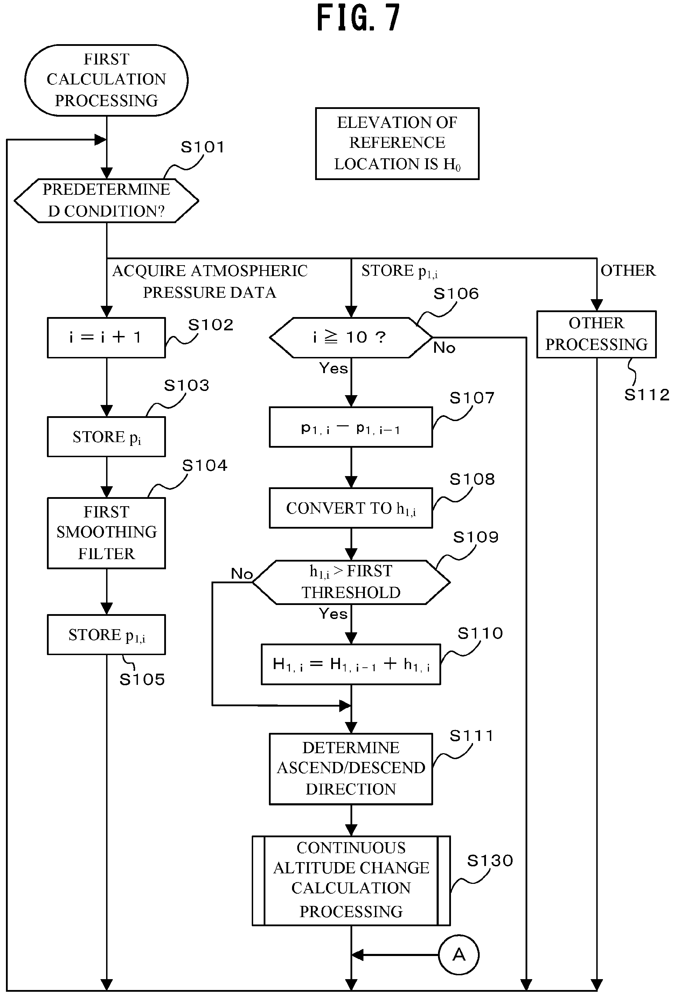

FIG. 7 is a flowchart for explaining the first calculation processing that starts when the cumulative altitude calculation processing illustrated in FIG. 4 starts. The first calculation processing is processing that is executed by the first calculator 120, and in which the first cumulative altitude is calculated from the atmospheric pressure data. The atmospheric pressure data is acquired from the atmospheric pressure sensor 40 every clock cycle of the clock signal supplied from the oscillation circuit 60 and the frequency dividing circuit 70. Additionally, the first calculator 120 calculates the first cumulative altitude in the first period every predetermined cycle, such as the clock cycle or the like. The first period is a cycle that is an integer multiple of the clock cycle and, here, the clock cycle is 1 second (1 Hz), and the first period is 10 seconds.

When the first calculation processing starts, the first calculation processing assumes a stand-by state until one of the conditions described later is satisfied (step S101). When the first calculator 120 acquires the atmospheric pressure data from the atmospheric pressure data acquirer 110, the clock cycle number i is incremented (step S102). Then, the first calculator 120 stores the atmospheric pressure value pᵢ that is the i^{th} atmospheric pressure data in the first altitude change table 21j (step S103).

Next, the first calculator 120 smooths the acquired atmospheric pressure data with the first smoothing filter 121 (step S104). Thereafter, the first calculator 120 stores the smoothed atmospheric pressure data p_{1,i} in the first altitude change table 21j retained in the RAM 20 (step S105). Then, the processing of step S101 is executed.

Next, when the atmospheric pressure data p_{1,i} that has been filtered by the first smoothing filter 121 is stored in the first altitude change table 21j, the first calculator 120 determines whether the clock cycle number i of the filtered atmospheric pressure data p_{1,i} is greater than or equal to 10 (sec), which is the first period (step S106). When the first calculator 120 determines that the clock cycle number i is greater than or equal to 10 (step S106; Yes), the first cumulative altitude calculator 123 calculates an atmospheric pressure difference p_{1,i} - p_{1,i-1}, which is a difference value between the i^{th} filtered atmospheric pressure value p_{1,i} and the (i-1)^{th} filtered atmospheric pressure value p_{1,i-1} (step S107). Meanwhile, when the first calculator 120 determines that i is less than 10 (step S106; No), the processing of step S101 is executed.

Returning to step S107, the first cumulative altitude calculator 123 converts, by a known function, the atmospheric pressures p_{1,i} and p_{1,i-1} to altitudes respectively corresponding thereto and, then, calculates, as the difference value between the altitudes, an ascend/descend difference value h_{1,i} (step S108).

Next, the first cumulative altitude calculator 123 determines whether the absolute value of the i^{th} ascend/descend difference value h_{1,i} is greater than a first threshold (step S109). When the first cumulative altitude calculator 123 determines that the absolute value of the i^{th} ascend/descend difference value h_{1,i} is greater than the first threshold (step S109; Yes), the first cumulative altitude calculator 123 uses the i^{th} ascend/descend difference value h_{1,i} to calculate an i^{th} first cumulative altitude H_{1,i} = H_{1,i-1}+h_{1,i} (step S110).

Meanwhile, when the first cumulative altitude calculator 123 determines that the absolute value of the i^{th} ascend/descend difference value h_{1,i} is less than the first threshold (step S109; No), step S110 is skipped and the ascend/descend difference value h_{1,i} is not added.

Next, the first ascend/descend determiner 122 determines the i^{th} ascend/descend direction (step S111). The first ascend/descend determiner 122 determines that the ascend/descend direction is a flat ground direction when the value of the ascend/descend difference value h_{1,i} is 0, an ascend direction when the value of the ascend/descend difference value h_{1,i} is positive, and a descend direction when the value of the ascend/descend difference value h_{1,i} is negative. In the first altitude change table 21j of FIG. 5, the symbol "↑" is stored when the ascend/descend direction is the ascend direction, the symbol "↓" is stored when the ascend/descend direction is the descend direction, and the symbol "→" is stored when the ascend/descend direction is the flat ground direction.

Here, when, in step S109, the first ascend/descend determiner 122 determines that the absolute value of the ascend/descend difference value is less than the first threshold, the first ascend/descend determiner 122 may determine that the ascend/descend direction is the flat ground direction. Additionally, for the periods in which the clock cycle number i is less than the first period, namely the period less than i = 9, the symbol "→", which indicates the flat ground direction, may be stored as an initial value.

Returning to FIG. 7, next, the first calculator 120 executes continuous altitude change calculation processing (step S130). In the continuous altitude change calculation processing, when the first ascend/descend determiner 122 determines that the ascend/descend direction is continuously the ascend direction or the descend direction, the first cumulative altitude calculator 123 adds together the ascend/descend difference value h_{1,i} of the intervals in which the ascend/descend direction is determined to continuously be the ascend direction or the descend direction, and retains the result as the continuous altitude change. When the first ascend/descend determiner 122 determines that the ascend/descend direction has changed from the ascend direction to the descend direction or from the descend direction to the ascend direction, the first cumulative altitude calculator 123 resets the continuous altitude change. Moreover, in cases in which the state determiner 140 determines that the current state is the second state, the integrator 150 uses the first cumulative altitude H_{1,i} when the continuous altitude change exceeds a predetermined threshold.

Furthermore, in the continuous altitude change calculation processing, when the intervals in which the first ascend/descend determiner 122 determines that the ascend/descend direction is continuously the flat ground direction exceed a predetermined threshold, the first cumulative altitude calculator 123 resets the continuous altitude change.

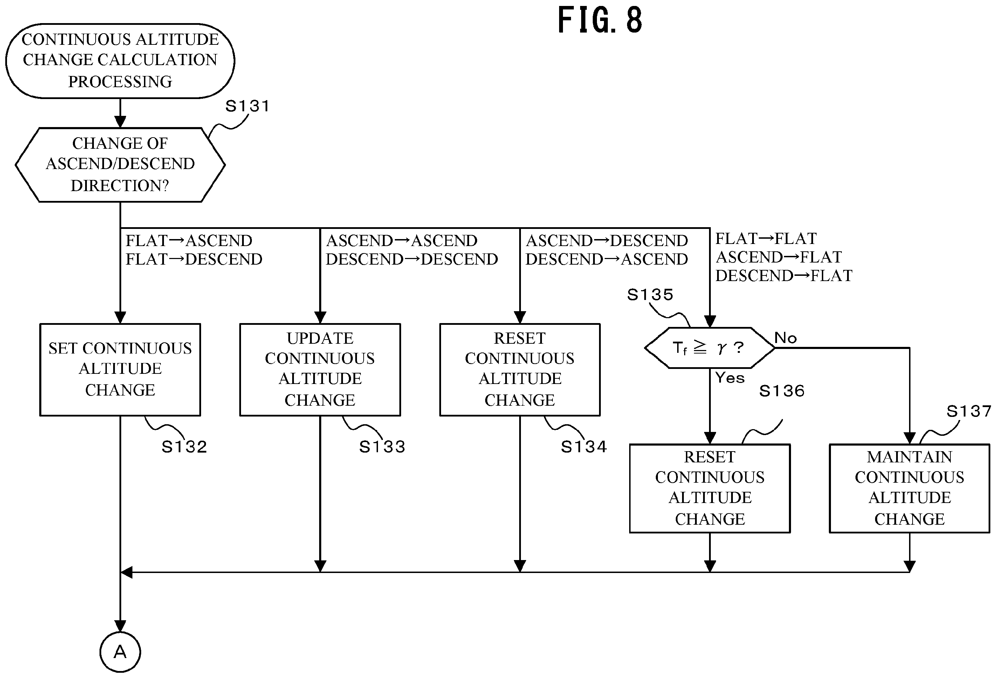

FIG. 8 is a flowchart for explaining the continuous altitude change calculation processing executed when, in the first calculation processing, the first calculator 120 calculates the first cumulative altitude H_{1,i}.

When the continuous altitude change calculation processing starts, the first ascend/descend determiner 122 determines whether there is an ascend/descend direction change in the i^{th} clock cycle (step S131). When the first ascend/descend determiner 122 determines that, for example, the ascend/descend direction in the (i-1)^{th} clock cycle is the flat ground direction (→), but the ascend/descend direction in the i^{th} clock cycle is the ascend direction (↑) or the descend direction (↓), the first cumulative altitude calculator 123 resets the continuous altitude change in order to start the counting of the continuous altitude change (step S132). At this time, the ascend/descend difference value h_{1,i} is set as an initial value in the continuous altitude change.

When the first ascend/descend determiner 122 determines that, for example, the ascend/descend direction in the (i-1)^{th} clock cycle is the ascend direction (↑), and the ascend/descend direction in the i^{th} clock cycle is the ascend direction (↑), or the ascend/descend direction in the (i-1)^{th} clock cycle is the descend direction (↓), and the ascend/descend direction in the i^{th} clock cycle is the descend direction (↓), the first cumulative altitude calculator 123 updates the continuous altitude change by adding the ascend/descend difference value h_{1,i} (step S133).

When the first ascend/descend determiner 122 determines that, for example, the ascend/descend direction in the (i-1)^{th} clock cycle is the ascend direction (↑), but the ascend/descend direction in the i^{th} clock cycle is the descend direction (↓), or the ascend/descend direction in the (i-1)^{th} clock cycle is the descend direction (↓), but the ascend/descend direction in the i^{th} clock cycle is the ascend direction (↑), the first cumulative altitude calculator 123 resets the continuous altitude change (step S134).

When the first ascend/descend determiner 122 determines that, for example, the ascend/descend direction in the (i-1)^{th} clock cycle is the flat ground direction (→), and the ascend/descend direction in the i^{th} clock cycle is the flat ground direction (→), or the ascend/descend direction in the (i-1)^{th} clock cycle is the ascend direction (↑), but the ascend/descend direction in the i^{th} clock cycle is the flat ground direction (→), or the ascend/descend direction in the (i-1)^{th} clock cycle is the descend direction (↓), but the ascend/descend direction in the i^{th} clock cycle is the flat ground direction (→), the first ascend/descend determiner 122 determines whether a period T_{f} in which the ascend/descend direction is the flat ground direction is greater than or equal to a predetermined period γ (step S135).

When the first ascend/descend determiner 122 determines that the period T_{f} in which the ascend/descend direction is the flat ground direction is greater than or equal to the predetermined period γ (step S135; Yes), the first cumulative altitude calculator 123 resets the continuous altitude change (step S136). Meanwhile, when the first ascend/descend determiner 122 determines that the period T_{f} in which the ascend/descend direction is the flat ground direction is not greater than or equal to the predetermined period γ (step S135; No), the first cumulative altitude calculator 123 maintains the continuous altitude change (step S137).

Thereafter, the processing proceeds to "A" of FIG. 8, and then step S101 illustrated in FIG. 7 is executed. Note that, the set, updated, or maintained continuous altitude change is retained in the RAM 20.

Next, in step S101, when the first calculator 120 determines that another condition is satisfied, the first calculator 120 executes other processing corresponding to that condition (step S112). Thereafter, the processing of step S101 is executed.

When the processing progresses in this manner, values are sequentially stored in the first altitude change table 21j, as illustrated in FIG. 5.

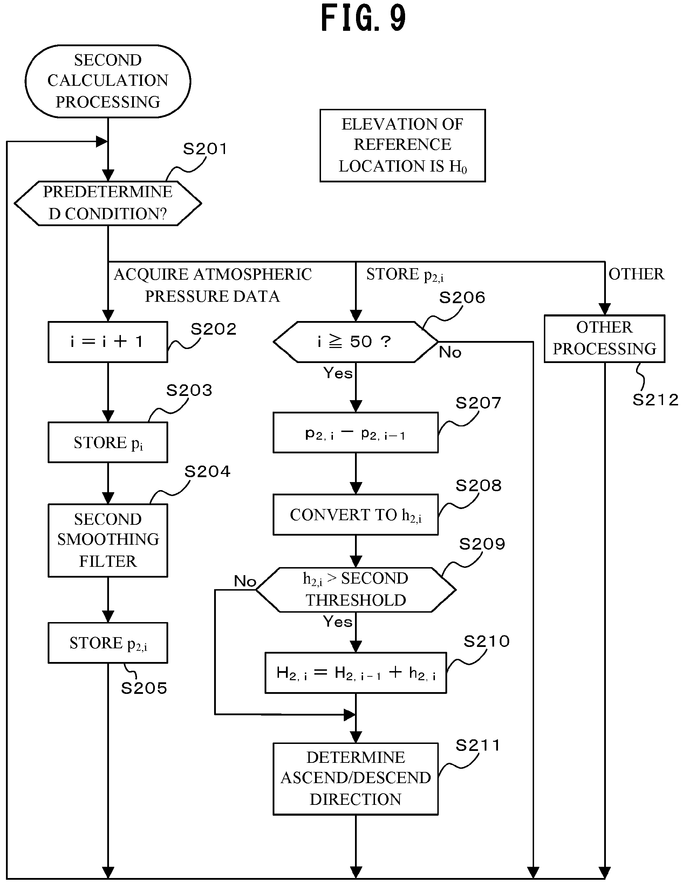

FIG. 9 is a flowchart for explaining the second calculation processing that starts when the cumulative altitude calculation processing illustrated in FIG. 4 starts. The second calculation processing is processing that is executed by the second calculator 130, and in which the second cumulative altitude is calculated from the atmospheric pressure data. The second calculator 130 calculates the second cumulative altitude in the second period every predetermined cycle such as the clock cycle or the like. The second period is a period that is an integer multiple of the clock cycle, and is greater than the first period. Here, the clock cycle is 1 second (1 Hz), and the second period is 50 seconds.

When the second calculation processing starts, the second calculation processing assumes a stand-by state until one of the conditions described later is satisfied (step S201). When the second calculator 130 acquires the atmospheric pressure data from the atmospheric pressure data acquirer 110, the clock cycle number i is incremented (step S202). Then, the second calculator 130 stores, in the second altitude change table 21k, the atmospheric pressure value pᵢ that is the i^{th} atmospheric pressure data (step S203).

Next, the second calculator 130 smooths the acquired atmospheric pressure data with the second smoothing filter 131 (step S204). Thereafter, the second calculator 130 stores the smoothed atmospheric pressure data p_{2,i} in the second altitude change table 21k retained in the RAM 20 (step S205).

Next, when the atmospheric pressure data p_{2,i} that has been filtered by the second smoothing filter 131 is stored in the second altitude change table 21k, the second calculator 130 determines whether the clock cycle number i of the filtered atmospheric pressure data p_{2,i} is greater than or equal to 50 (sec), which is the second period (step S206). When the second calculator 130 determines that the clock cycle number i is greater than or equal to 50 (step S206; Yes), the second cumulative altitude calculator 133 calculates an atmospheric pressure difference p_{2,i} - P_{2,i-1}, which is a difference value between the i^{th} filtered atmospheric pressure value p_{2,i} and the (i-1)^{th} filtered atmospheric pressure value p_{2,i-1} (step S207). Meanwhile, when the second calculator 130 determines that i is less than 50 (step S206; No), the processing of step S201 is executed.

Returning to step S207, the second cumulative altitude calculator 133 converts, by a known function, the atmospheric pressures p_{2,i} and p_{2,i-1} to an ascend/descend difference value h_{2,i} (step S208).

Next, the second cumulative altitude calculator 133 determines whether the absolute value of the i^{th} ascend/descend difference value h_{2,i} is greater than a second threshold (step S209). When the second cumulative altitude calculator 133 determines that the absolute value of the i^{th} ascend/descend difference value h_{2,i} is greater than the second threshold (step S209; Yes), the second cumulative altitude calculator 133 uses the i^{th} ascend/descend difference value h_{2,i} to calculate an i^{th} second cumulative altitude H_{2,i} = H_{2,i-1}+h_{2,i} (step S210).

Meanwhile, when the second cumulative altitude calculator 133 determines that the absolute value of the i^{th} ascend/descend difference value h_{2,i} is less than the second threshold (step S209; No), step S210 is skipped and the ascend/descend difference value h_{2,i} is not added.

Next, the second ascend/descend determiner 132 determines the i^{th} ascend/descend direction (step S211). The method for determining the ascend/descend direction is the same as that used by the first ascend/descend determiner 122. Thereafter, the processing of step S201 is executed.

Next, in step S201, when the second calculator 130 determines that another condition is satisfied, the second calculator 130 executes other processing corresponding to that condition (step S215). Thereafter, the processing of step S201 is executed.

When the processing progresses in this manner, values are sequentially stored in the second altitude change table 21k, as illustrated in FIG. 6.

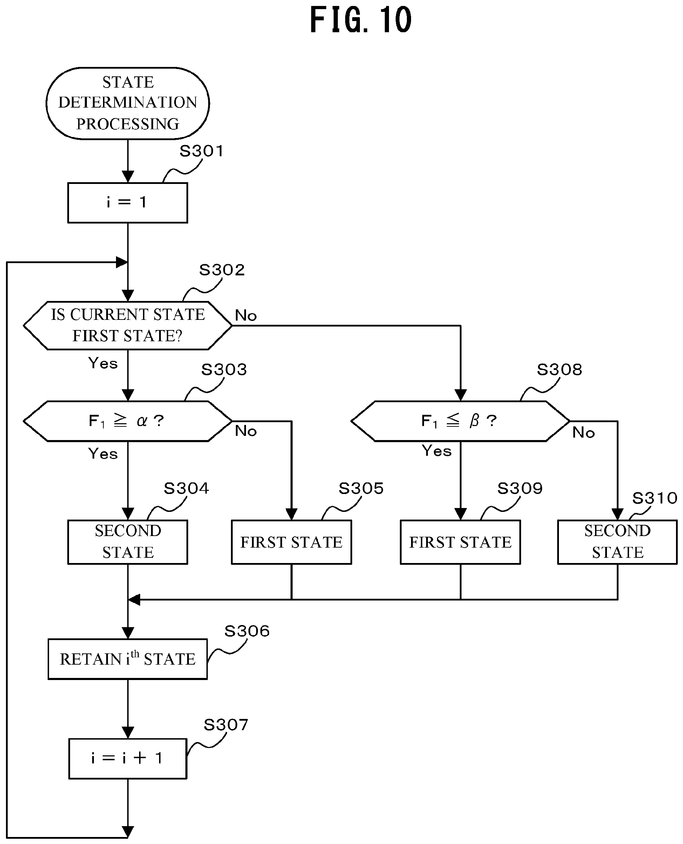

FIG. 10 is a flowchart for explaining the state determination processing that starts when the cumulative altitude calculation processing illustrated in FIG. 4 starts. The state determination processing is processing that is executed by the state determiner 140. In the state determination processing, the state determiner 140 determines, from the atmospheric pressure data, if the current state is the first state or the second state. The state determiner 140 determines the current state every 1 second, which is the clock cycle.

When the state determination processing starts, the state determiner 140 sets the clock cycle number i to i = 1 (step S301). Then, the state determiner 140 determines whether the current state is the first state (step S302). Note that, the first state may be set in the first clock cycle. Here, since it is the first clock cycle, an assumption is made that the state determiner 140 determines that the current state is the first state (step S302; Yes).

Next, the state determiner 140 determines whether an ascend/descend switching frequency F₁ is greater than or equal to a predetermined value α (step S303). The ascend/descend switching frequency F₁ is the number of times per unit time that the ascend/descend direction of the first altitude change table 21j illustrated in FIG. 5 switches. In a predetermined period up to the clock cycle number i, the state determiner 140 calculates the ascend/descend switching frequency F₁, and determines whether F₁ is greater than or equal to the predetermined value α. For example, the determination of step S303 may be made on the basis of the ascend/descend switching frequency F₁ in the first period, namely, a period of the past 10 seconds, as the predetermined period.

When the state determiner 140 determines that the ascend/descend switching frequency F₁ is greater than or equal to the predetermined value α (step S303; Yes), the state determiner 140 determines that the current state in the i = 1^{th} clock cycle is switched to the second state (step S304). Meanwhile, when the state determiner 140 determines that the ascend/descend switching frequency F₁ is less than or equal to the predetermined value α (step S304; No), the state determiner 140 determines that the current state continues to be the first state (step S305).

Then, the state determiner 140 retains the determined current state in the RAM 20 (step S306), and increments the clock cycle number i (step S307). Thereafter, the processing of step S302 is executed.

Next, when, in step S302, the state determiner 140 determines that the current state is the second state (step S302; No), the state determiner 140 determines whether the ascend/descend switching frequency F₁ is less than or equal to a predetermined value β different than α (step S308). In the predetermined period up to the clock cycle number i, the state determiner 140 calculates the ascend/descend switching frequency F₁ and determines whether F₁ is less than or equal to the predetermined value β. Note that, even when the current state is the second state, the reason that the ascend/descend switching frequency F₁ calculated from the ascend/descend direction of the first altitude change table 21j is used is because the first intensity related to the intensity of the smoothing is smaller than the second intensity, and noise more similar to the actual noise can be picked up. Of course, it is possible to use an ascend/descend switching frequency calculated from the ascend/descend direction of the second altitude change table 21k. Moreover, α and β may be identical values.

When the state determiner 140 determines that the ascend/descend switching frequency F₁ is less than or equal to the predetermined value β (step S308; Yes), the state determiner 140 determines that the current state in the i = 1^{th} clock cycle is switched to the first state (step S309). Meanwhile, when the state determiner 140 determines that the ascend/descend switching frequency F₁ is greater than or equal to the predetermined value β (step S308; No), the state determiner 140 determines that the current state continues to be the second state (step S310). Then, the processing of step S306 is executed and the processing proceeds as described above.

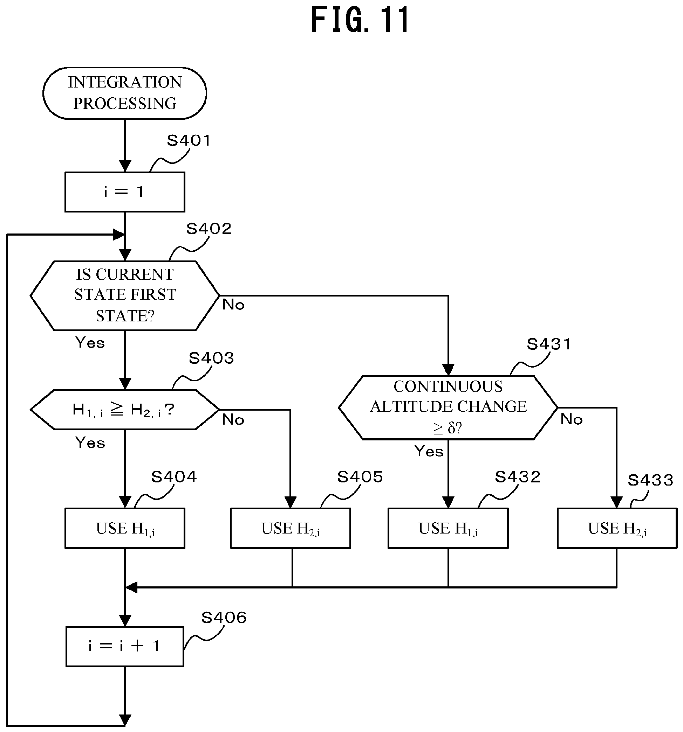

FIG. 11 is a flowchart for explaining the integration processing that starts when the cumulative altitude calculation processing illustrated in FIG. 4 starts. The integration processing is processing that is executed by the integrator 150. In the integration processing, a cumulative altitude is derived on the basis of the first cumulative altitude and the second cumulative altitude, in accordance with whether the current state is the first state or the second state.

When the integration processing starts, the integrator 150 sets the clock cycle number i to i = 1 (step S401). Then, the integrator 150 determines whether the current state is the first state (step S402). Note that, the first state may be set in the first clock cycle. Here, since it is the first clock cycle, an assumption is made that the integrator 150 determines that the current state is the first state (step S402; Yes).

Next, the integrator 150 determines whether the first cumulative altitude H_{1,i} in the i^{th} clock cycle is greater than or equal to the second cumulative altitude H_{2,i} (step S403).

When the integrator 150 determines that the first cumulative altitude H_{1,i} in the i^{th} clock cycle is greater than or equal to the second cumulative altitude H_{2,i} (step S403; Yes), the integrator 150 uses the first cumulative altitude H_{1,i} (step S404). Meanwhile, when the integrator 150 determines that the first cumulative altitude H_{1,i} in the i^{th} clock cycle is less than or equal to the second cumulative altitude H_{2,i} (step S403; No), the integrator 150 uses the second cumulative altitude H_{2,i} (step S405).

Meanwhile, when, in step S402, the integrator 150 determines that the current state is the second state (step S402; No), the integrator 150 determines whether the continuous altitude change is greater than or equal to a predetermined value δ (step S431). When the integrator 150 determines that the continuous altitude change is greater than or equal to the predetermined value δ (step S431; Yes), the integrator 150 uses the first cumulative altitude H_{1,i} (step S432). Meanwhile, when the integrator 150 determines that the continuous altitude change is less than or equal to the predetermined value δ (step S431; No), the integrator 150 uses the second cumulative altitude H_{2,i} (step S433). Then, the processing of step S406 is executed and the same processing as in Embodiment 1 is executed.

Specifically, when the state determiner 140 determines that the current state is the first state, the integrator 150 uses the greater of the first cumulative altitude H_{1,i} and the second cumulative altitude H_{2,i}. Conversely, when the state determiner 140 determines that the current state is the second state, the integrator 150 uses the first cumulative altitude H_{1,i} or the second cumulative altitude H_{2,i} in accordance with the magnitude of the continuous altitude change. Then, the clock cycle number i is incremented (step S406), and the processing of step S402 is executed.

As described above, in the first state, the integrator 150 uses the greater cumulative altitude of the first cumulative altitude H_{1,i} and the second cumulative altitude H_{2,i}. Due to such a configuration, it is possible to salvage cases such as when the user is, in reality, gradually ascending a slope but, in the calculations by the first calculator 120, the ascend/descend difference value is canceled out due to the up and down of the arm swing of the user that does not exceed the first threshold. Of course, a configuration is possible in which the first cumulative altitude H_{1,i} is used in the first state, and the second cumulative altitude H_{2,i} is used in the second state.

According to Embodiment 1 described above, the cumulative altitude calculation device 100 smooths the atmospheric pressure data with two types of smoothing filters that have different intensities, and estimates the cumulative altitude of the current location by using one of the two types of smoothing filters in accordance with the amount of noise included in the atmospheric pressure data. For example, with the portable altimeter described in the publication mentioned above, altitude greater than actual may be added due to the portable altimeter being subjected to an external factor such as strong wind or arm swing when worn on an arm and, conversely, altitude may not be added when the altitude change is gradual. In contrast, according to Embodiment 1, in cases in which subjected to an external factor such as strong wind or arm swing, atmospheric pressure data that is smoothed using high intensity can be used and, as a result, the altitude of the current location can be accurately calculated.

According to Embodiment 1, a configuration is used in which the continuous altitude change is calculated, and the first cumulative altitude H_{1,i} is used when the continuous altitude change is greater than or equal to the predetermined value, even when in the second state. Due to this configuration, the cumulative altitude can be more correctly estimated in situations in which noise is great such as when running up or down stairs, for example. That is, even when there is a large amount of noise and a determination is made that the current state is switched to the second state, in a case in which there is more actual altitude change due to sudden ascending or descending than the atmospheric pressure change due to the noise, it is possible to more accurately estimate the altitude of the current location by using the first cumulative altitude H_{1,i} that is thought to be a value closer to the actual altitude.

Furthermore, according to Embodiment 1, a configuration is used in which the continuous altitude change is maintained without resetting when the period T_{f} in which the ascend/descend direction is the flat ground direction is shorter than the predetermined period. Due to this configuration, even when, for example, a determination is made that the current location is a temporary flat ground such as a landing of a staircase, the continuous altitude change is maintained and, as such, even when in the second state, the first cumulative altitude H_{1,i} is used if the predetermined condition is satisfied. As a result, the altitude of the current location can be accurately estimated.

### Embodiment 2

Next, Embodiment 2 of the present disclosure is described. In Embodiment 2, constituents and processings identical to those of Embodiment 1 are denoted with the same reference numerals. In Embodiment 1, a configuration is used in which, in accordance with the current state, for the period in which it is that state, one of the cumulative altitudes is always used. In the second state in which the amount of noise is great, the second period for calculating the ascend/descend difference value is a period for calculating the ascend/descend difference value from the atmospheric pressure data that is smoothed with great intensity and, as such, a comparatively large period is necessary. As such, there is a problem in that there is a time lag until the ascend/descend difference value is calculated and, during that time lag, the user cannot be provided with the estimated value of the current altitude. In Embodiment 2, a configuration is used in which the first cumulative altitude H_{1,i} is used for a brief period after switching from the first state to the second state.

In Embodiment 2, among the four processings that start when the cumulative altitude calculation processing illustrated in FIG. 4 starts, the first calculation processing (step S100), the second calculation processing (step S200), and the state determination processing (step S300) are the same as in Embodiment 1.

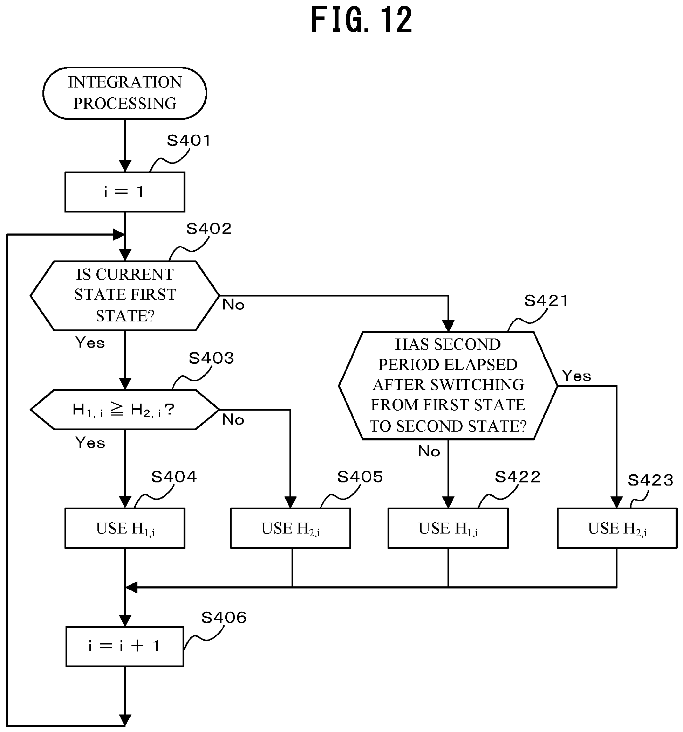

FIG. 12 is a flowchart for explaining the integration processing of Embodiment 2. When the integration processing starts, the integrator 150 sets the clock cycle number i to i = 1 (step S401). Then, the integrator 150 determines whether the current state is the first state (step S402). Here, an assumption is made that the integrator 150 determines that the current state is the first state (step S402; Yes).

Next, the integrator 150 determines whether the first cumulative altitude H_{1,i} in the i^{th} clock cycle is greater than or equal to the second cumulative altitude H_{2,i} (step S403).

When the integrator 150 determines that the first cumulative altitude H_{1,i} in the i^{th} clock cycle is greater than or equal to the second cumulative altitude H_{2,i} (step S403; Yes), the integrator 150 uses the first cumulative altitude H_{1,i} (step S404). Meanwhile, when the integrator 150 determines that the first cumulative altitude H_{1,i} in the i^{th} clock cycle is less than or equal to the second cumulative altitude H_{2,i} (step S403; No), the integrator 150 uses the second cumulative altitude H_{2,i} (step S405).

However, when, in step S402, the integrator 150 determines that the current state is the second state (step S402; No), the integrator 150 determines whether the first second period has elapsed after switching from the first state to the second state (step S421).

When the integrator 150 determines that the first second period has not elapsed after switching from the first state to the second state (step S421; No), the integrator 150 uses the first cumulative altitude H_{1,i} (step S422). Specifically, when the state determiner 140 determines that the current state has transitioned from the first state to the second state, the integrator 150 uses the first cumulative altitude up to when the first second period elapses.

Meanwhile, when the integrator 150 determines that the first second period has elapsed after switching from the first state to the second state (step S421; Yes), the integrator 150 uses the second cumulative altitude H_{2,i} (step S423).

Then, the integrator 150 increments the clock cycle number i (step S406), and executes the processing of step S402.

Note that a configuration is possible in which, in step S421, instead of determining whether the first second period has elapsed after switching from the first state to the second state, the integrator 150 determines whether a predetermined period other than the first second period has elapsed.

According to Embodiment 2 described above, the integrator 150 uses the first cumulative altitude H_{1,i} until the second period elapses after switching from the first state to the second state. Due to this configuration, it is possible to eliminate the time lag from after switching from the first state to the second state until the first ascend/descend difference value is calculated, and a more correct estimated value of the current altitude can be provided to the user.

### Modified Examples

In Embodiments 1 and 2 described above, the first calculation processing and the second calculation processing are executed in parallel but, in this case, for example, the value of the first cumulative altitude H_{1,i} may increase in situations in which the noise is great, and the difference between the first cumulative altitude H_{1,i} and the second cumulative altitude H_{2,i} may increase. To address this, a configuration is possible in which, when the state determiner 140 determines that the current state is the second state, the integrator 150 interrupts the calculation by the first calculator 120. In this case, a configuration is possible in which, when a determination is made that the second cumulative altitude H_{2,i} calculated by the second calculator 130 is the same as the first cumulative altitude H_{1,i} or greater than the first cumulative altitude H_{1,i} calculated by the first calculator 120, calculation by the first calculator 120 is restarted.

While the present invention has been described with reference to exemplary embodiments, it is to be understood that the invention is not limited to the disclosed exemplary embodiments. The following claims define the scope of the present invention.

## Claims

1. A cumulative altitude calculation device (100), comprising:
an atmospheric pressure sensor (40);
a memory (20, 30); and
one or more processors (10), wherein
the one or more processors (10) executes a following processing in accordance with instructions stored in the memory (20, 30):
acquiring atmospheric pressure data from the atmospheric pressure sensor (40),
calculating a first cumulative altitude from the acquired atmospheric pressure data,
calculating a second cumulative altitude from the acquired atmospheric pressure data,
determining, from the acquired atmospheric pressure data, whether a current state is a first state or a second state, and
deriving, in accordance with the determined current state and based on the first cumulative altitude and the second cumulative altitude, a cumulative altitude,
the cumulative altitude calculation device (100) is **characterized in that**
the calculating of the first cumulative altitude includes
smoothing the acquired atmospheric pressure data using a first smoothing filter (121) that is a low-pass filter with a cutoff frequency being a first frequency,
determining, from the atmospheric pressure data smoothed by the first smoothing filter (121), an ascend/descend direction in a first period for every first cycle, and recording a first altitude change, and
calculating an ascend/descend difference value in the first cycle, and calculating the first cumulative altitude based on the determined ascend/descend direction and the calculated ascend/descend difference value,
the calculating of the second cumulative altitude includes
smoothing the acquired atmospheric pressure data using a second smoothing filter (131) that is a low-pass filter with a cutoff frequency being lower than the first frequency,
determining, from the atmospheric pressure data smoothed by the second smoothing filter (131), an ascend/descend direction in a second period greater than the first period for every second cycle that is greater than the first cycle, and recording a second altitude change, and
calculating an ascend/descend difference value in the second cycle, and calculating the second cumulative altitude based on the determined ascend/descend direction and the calculated ascend/descend difference value, and
the determining of the current state includes determining that the current state is the first state in a case in which an ascend/descend switching frequency in the recording of the first altitude change is less than a predetermined reference and determining that the current state is the second stated in a state in which the ascend/descend switching frequency in the recording of the first altitude change is greater than the predetermined reference.

2. The cumulative altitude calculation device (100) according to claim 1, wherein
in a case in which the ascend/descend difference value in the first cycle is greater than a first threshold, the calculating of the first cumulative altitude includes calculating the first cumulative altitude using the ascend/descend difference value in the first cycle, and
in a case in which the ascend/descend difference value in the second cycle is greater than a second threshold smaller than the first threshold, the calculating of the second cumulative altitude includes calculating the second cumulative altitude using the ascend/descend difference value in the second cycle.

3. The cumulative altitude calculation device (100) according to claim 1 or 2, wherein
in a case in which, in the determining of the current state, the current state is determined to be the first state, the deriving of the cumulative altitude includes using, as the cumulative altitude, whichever is greater of the first cumulative altitude and the second cumulative altitude, and
in a case in which, in the determining of the current state, the current state is determined to be the second state, the deriving of the cumulative altitude includes using the second cumulative altitude as the cumulative altitude.

4. The cumulative altitude calculation device (100) according to claim 1 or 2, wherein in a case in which, in the determining of the current state, a determination is made of transitioning from the first state to the second state, the deriving of the cumulative altitude includes using the first cumulative altitude as the cumulative altitude until the second period elapses after switching from the first state to the second state.

5. The cumulative altitude calculation device (100) according to claim 1 or 2, wherein
in a case in which, in the determining of the ascend/descend direction in the first period, a determination is continuously made that the ascend/descend direction is an ascend direction or a descend direction, the calculating of the first cumulative altitude includes adding together the ascend/descend difference value of intervals in which the ascend/descend direction is continuously determined as the ascend direction or the descend direction, and retaining a result as the continuous altitude change,
in a case in which, in the determining of the ascend/descend direction in the first period, a determination is made that the ascend/descend direction changes from the ascend direction to the descend direction or from the descend direction to the ascend direction, the calculating of the first cumulative altitude includes resetting the continuous altitude change, and
in a case in which, in the determining of the current state, a determination is made that the current state is the second state, in a case in which, in the deriving of the cumulative altitude, the continuous altitude change exceeds a predetermined threshold, the first cumulative altitude is used as the cumulative altitude.

6. The cumulative altitude calculation device (100) according to claim 5, wherein in a case in which, in the determining of the ascend/descend direction in the first period, the intervals in which the ascend/descend direction is continuously determined to be a flat ground direction exceeds a predetermined threshold, the calculating of the first cumulative altitude includes resetting the continuous altitude change.

7. The cumulative altitude calculation device (100) according to any one of claims 1 to 3, wherein in a case in which, in the determining of the current state, the current state is determined to be the second state, in the deriving of the cumulative altitude, calculation in the calculating of the first cumulative altitude is interrupted and, in a case in which a determination is made that a second cumulative altitude in the calculating of the second cumulative altitude is equal to or greater than a first cumulative altitude in the calculating of the first cumulative altitude, restarting the calculation in the calculating of the first cumulative altitude.

8. A cumulative altitude calculation method executed by a cumulative altitude calculation device (100) including an atmospheric pressure sensor (40), the method comprising:
acquiring atmospheric pressure data from the atmospheric pressure sensor (40);
calculating a first cumulative altitude from the acquired atmospheric pressure data;
calculating a second cumulative altitude from the acquired atmospheric pressure data;
determining, from the acquired atmospheric pressure data, whether a current state is a first state or a second state; and
deriving, in accordance with the determined current state and based on the first cumulative altitude and the second cumulative altitude, a cumulative altitude,
**characterized in that**
the calculating of the first cumulative altitude includes
smoothing the acquired atmospheric pressure data using a first smoothing filter (121) that is a low-pass filter with a cutoff frequency being a first frequency,
determining, from the atmospheric pressure data smoothed by the first smoothing filter (121), an ascend/descend direction in a first period for every first cycle, and recording a first altitude change, and
calculating an ascend/descend difference value in the first cycle, and calculating the first cumulative altitude based on the determined ascend/descend direction and the calculated ascend/descend difference value,
the calculating of the second cumulative altitude includes
smoothing the acquired atmospheric pressure data using a second smoothing filter (131) that is a low-pass filter with a cutoff frequency being lower than the first frequency,
determining, from the atmospheric pressure data smoothed by the second smoothing filter (131), an ascend/descend direction in a second period greater than the first period for every second cycle that is greater than the first cycle, and recording a second altitude change, and
calculating an ascend/descend difference value in the second cycle, and calculating the second cumulative altitude based on the determined ascend/descend direction and the calculated ascend/descend difference value, and
the determining of the current state includes determining that the current state is the first state in a case in which an ascend/descend switching frequency in the recording of the first altitude change is less than a predetermined reference and determining that the current state is the second stated in a state in which the ascend/descend switching frequency in the recording of the first altitude change is greater than the predetermined reference.

9. The cumulative altitude calculation method according to claim 8, wherein
in a case in which, in the determining of the current state, the current state is determined to be the first state, the deriving of the cumulative altitude includes using, as the cumulative altitude, whichever is greater of the first cumulative altitude and the second cumulative altitude, and
in a case in which, in the determining of the current state, the current state is determined to be the second state, the deriving of the cumulative altitude includes using the second cumulative altitude as the cumulative altitude.

10. The cumulative altitude calculation method according to claim 8 or 9, wherein in a case in which, in the determining of the current state, the current state is determined to be the second state, in the deriving of the cumulative altitude, calculation in the calculating of the first cumulative altitude is interrupted and, in a case in which a determination is made that a second cumulative altitude in the calculating of the second cumulative altitude is equal to or greater than a first cumulative altitude in the calculating of the first cumulative altitude, restarting the calculation in the calculating of the first cumulative altitude.

11. A program executable by one or more processors (10) in a cumulative altitude calculation device (100) including an atmospheric pressure sensor (40),
the program causing the one or more processors (10) to perform:
an acquisition of atmospheric pressure data from the atmospheric pressure sensor (40),
a calculation of the first cumulative altitude form the acquired atmospheric pressure data,
a calculation of a second cumulative altitude from the acquired atmospheric pressure data,
a determination, from the acquired atmospheric pressure data, whether a current state is a first state or a second state, and
a derivation, in accordance with the determined current state and based on the first cumulative altitude and the second cumulative altitude, a cumulative altitude,
the cumulative altitude calculation device (100) is **characterized in that**
the calculating of the first cumulative altitude includes
smoothing the acquired atmospheric pressure data using a first smoothing filter (121) that is a low-pass filter with a cutoff frequency being a first frequency,
determining, from the atmospheric pressure data smoothed by the first smoothing filter (121), an ascend/descend direction in a first period for every first cycle, and recording a first altitude change, and
calculating an ascend/descend difference value in the first cycle, and calculating the first cumulative altitude based on the determined ascend/descend direction and the calculated ascend/descend difference value,
the calculating of the second cumulative altitude includes
smoothing the acquired atmospheric pressure data using a second smoothing filter (131) that is a low-pass filter with a cutoff frequency being lower than the first frequency,
determining, from the atmospheric pressure data smoothed by the second smoothing filter (131), an ascend/descend direction in a second period greater than the first period for every second cycle that is greater than the first cycle, and recording a second altitude change, and
calculating an ascend/descend difference value in the second cycle, and calculating the second cumulative altitude based on the determined ascend/descend direction and the calculated ascend/descend difference value, and
the determining of the current state includes determining that the current state is the first state in a case in which an ascend/descend switching frequency in the recording of the first altitude change is less than a predetermined reference and determining that the current state is the second stated in a state in which the ascend/descend switching frequency in the recording of the first altitude change is greater than the predetermined reference .

12. The program according to claim 11, wherein,
in a case in which, in the determination of the current state, the current state is determined to be the first state, the derivation of the cumulative altitude includes adoption, as the cumulative altitude, whichever is greater of the first cumulative altitude and the second cumulative altitude, and
in a case in which, in the determination of the current state, the current state is determined to be the second state, the derivation of the cumulative altitude includes adoption of the second cumulative altitude as the cumulative altitude.

13. The program according to claim 11 or 12, wherein in a case in which, in the determination of the current state, the current state is determined to be the second state, in the derivation of the cumulative altitude, calculation in the calculation of the first cumulative altitude is interrupted and, in a case in which a determination is made that a second cumulative altitude in the calculation of the second cumulative altitude is equal to or greater than a first cumulative altitude in the calculation of the first cumulative altitude, the calculation in the calculating of the first cumulative altitude is restarted.

## Patentansprüche

1. Kumulative Höhenberechnungsvorrichtung (100), umfassend:
einen atmosphärischen Drucksensor (40);
einen Speicher (20, 30); und
einen oder mehrere Prozessoren (10), wobei
der eine oder die mehreren Prozessoren (10) ein folgendes Verarbeiten in Übereinstimmung mit Anweisungen, die in dem Speicher (20, 30) gespeichert sind, ausführen:
Erfassen von atmosphärischen Druckdaten von dem atmosphärischen Drucksensor (40),
Berechnen einer ersten kumulativen Höhe aus den erfassten atmosphärischen Druckdaten,
Berechnen einer zweiten kumulativen Höhe aus den erfassten atmosphärischen Druckdaten,
Bestimmen, aus den erfassten atmosphärischen Druckdaten, ob ein aktueller Zustand ein erster Zustand oder ein zweiter Zustand ist, und
Ableiten, in Übereinstimmung mit dem bestimmten aktuellen Zustand und basierend auf der ersten kumulativen Höhe und der zweiten kumulativen Höhe, einer kumulativen Höhe,
wobei die kumulative Höhenberechnungsvorrichtung (100) **dadurch gekennzeichnet ist, dass**
das Berechnen der ersten kumulativen Höhe Folgendes einschließt
Glätten der erfassten atmosphärischen Druckdaten unter Verwendung eines ersten Glättungsfilters (121), der ein Tiefpassfilter mit einer Grenzfrequenz ist, die eine erste Frequenz ist,
Bestimmen, aus den atmosphärischen Druckdaten, die durch den ersten Glättungsfilter (121) geglättet wurden, einer Aufstiegs-/Abstiegsrichtung in einer ersten Periode für jeden ersten Zyklus und Aufzeichnen einer ersten Höhenänderung, und
Berechnen eines Aufstiegs-/Abstiegsdifferenzwertes in dem ersten Zyklus und Berechnen der ersten kumulativen Höhe basierend auf der bestimmten Aufstiegs-/Abstiegsrichtung und dem berechneten Aufstiegs-/Abstiegsdifferenzwert,
wobei das Berechnen der zweiten kumulativen Höhe Folgendes einschließt
Glätten der erfassten atmosphärischen Druckdaten unter Verwendung eines zweiten Glättungsfilters (131), der ein Tiefpassfilter mit einer Grenzfrequenz ist, die niedriger als die erste Frequenz ist,
Bestimmen, aus den atmosphärischen Druckdaten, die durch den zweiten Glättungsfilter (131) geglättet wurden, einer Aufstiegs-/Abstiegsrichtung in einer zweiten Periode, die größer als die erste Periode ist, für jeden zweiten Zyklus, der größer als der erste Zyklus ist, und Aufzeichnen einer zweiten Höhenänderung, und
Berechnen eines Aufstiegs-/Abstiegsdifferenzwertes in dem zweiten Zyklus und Berechnen der zweiten kumulativen Höhe basierend auf der bestimmten Aufstiegs-/Abstiegsrichtung und dem berechneten Aufstiegs-/Abstiegsdifferenzwert, und
wobei das Bestimmen des aktuellen Zustands das Bestimmen, dass der aktuelle Zustand der erste Zustand in einem Fall ist, in dem eine Aufstiegs-/Abstiegswechselfrequenz in der Aufzeichnung der ersten Höhenänderung kleiner als eine vorbestimmte Referenz ist, und Bestimmen, dass der aktuelle Zustand der zweite Zustand in einem Fall ist, in dem die Aufstiegs-/Abstiegswechselfrequenz in der Aufzeichnung der ersten Höhenänderung größer als die vorbestimmte Referenz ist, einschließt.

2. Kumulative Höhenberechnungsvorrichtung (100) nach Anspruch 1, wobei
in einem Fall, in dem der Aufstiegs-/Abstiegsdifferenzwert in dem ersten Zyklus größer als ein erster Schwellenwert ist, das Berechnen der ersten kumulativen Höhe das Berechnen der ersten kumulativen Höhe unter Verwendung des Aufstiegs-/Abstiegsdifferenzwertes in dem ersten Zyklus einschließt, und
in einem Fall, in dem der Aufstiegs-/Abstiegsdifferenzwert im zweiten Zyklus größer als ein zweiter Schwellenwert ist, der kleiner als der erste Schwellenwert ist, das Berechnen der zweiten kumulativen Höhe das Berechnen der zweiten kumulativen Höhe unter Verwendung des Aufstiegs-/Abstiegsdifferenzwertes im zweiten Zyklus einschließt.

3. Kumulative Höhenberechnungsvorrichtung (100) nach Anspruch 1 oder 2, wobei
in einem Fall, in dem bei dem Bestimmen des aktuellen Zustands der aktuelle Zustand als der erste Zustand bestimmt wird, das Ableiten der kumulativen Höhe das Verwenden, als die kumulative Höhe, einschließt, was immer größer ist von der ersten kumulativen Höhe und der zweiten kumulativen Höhe, und
in einem Fall, in dem bei dem Bestimmen des aktuellen Zustands der aktuelle Zustand als der zweite Zustand bestimmt wird, das Ableiten der kumulativen Höhe das Verwenden der zweiten kumulativen Höhe als die kumulative Höhe einschließt.

4. Kumulative Höhenberechnungsvorrichtung (100) nach Anspruch 1 oder 2, wobei in einem Fall, in dem bei dem Bestimmen des aktuellen Zustands eine Bestimmung des Übergehens vom ersten Zustand zum zweiten Zustand gemacht wird, das Ableiten der kumulativen Höhe das Verwenden der ersten kumulativen Höhe als die kumulative Höhe einschließt, bis die zweite Periode nach dem Wechsel vom ersten Zustand zum zweiten Zustand verstrichen ist.

5. Kumulative Höhenberechnungsvorrichtung (100) nach Anspruch 1 oder 2, wobei
in einem Fall, in dem bei dem Bestimmen der Aufstiegs-/Abstiegsrichtung in der ersten Periode eine Bestimmung kontinuierlich gemacht wird, dass die Aufstiegs-/Abstiegsrichtung eine Aufstiegsrichtung oder eine Abstiegsrichtung ist, das Berechnen der ersten kumulativen Höhe das Addieren des Aufstiegs-/Abstiegsdifferenzwertes von Intervallen einschließt, in denen die Aufstiegs-/Abstiegsrichtung kontinuierlich als die Aufstiegsrichtung oder die Abstiegsrichtung bestimmt wird, und ein Ergebnis als die kontinuierliche Höhenänderung festgehalten wird,
in einem Fall, in dem bei dem Bestimmen der Aufstiegs-/Abstiegsrichtung in der ersten Periode eine Bestimmung gemacht wird, dass sich die Aufstiegs-/Abstiegsrichtung von der Aufstiegsrichtung in die Abstiegsrichtung oder von der Abstiegsrichtung in die Aufstiegsrichtung ändert, das Berechnen der ersten kumulativen Höhe das Zurücksetzen der kontinuierlichen Höhenänderung einschließt, und
in einem Fall, in dem bei dem Bestimmen des aktuellen Zustands eine Bestimmung gemacht wird, dass der aktuelle Zustand der zweite Zustand ist, in einem Fall, in dem bei dem Ableiten der kumulativen Höhe die kontinuierliche Höhenänderung einen vorbestimmten Schwellenwert überschreitet, die erste kumulative Höhe als die kumulative Höhe verwendet wird.

6. Kumulative Höhenberechnungsvorrichtung (100) nach Anspruch 5, wobei in einem Fall, in dem bei dem Bestimmen der Aufstiegs-/Abstiegsrichtung in der ersten Periode die Intervalle, in denen die Aufstiegs-/Abstiegsrichtung kontinuierlich als eine flache Bodenrichtung bestimmt wird, einen vorbestimmten Schwellenwert überschreiten, das Berechnen der ersten kumulativen Höhe Zurücksetzen der kontinuierlichen Höhenänderung einschließt.

7. Kumulative Höhenberechnungsvorrichtung (100) nach einem der Ansprüche 1 bis 3, wobei in einem Fall, in dem bei dem Bestimmen des aktuellen Zustands der aktuelle Zustand als der zweite Zustand bestimmt wird, bei dem Ableiten der kumulativen Höhe die Berechnung bei dem Berechnen der ersten kumulativen Höhe unterbrochen wird und, in einem Fall, in dem eine Bestimmung gemacht wird, dass eine zweite kumulative Höhe bei dem Berechnen der zweiten kumulativen Höhe gleich oder größer ist als eine erste kumulative Höhe bei dem Berechnen der ersten kumulativen Höhe, die Berechnung bei dem Berechnen der ersten kumulativen Höhe neu gestartet wird.

8. Kumulatives Höhenberechnungsverfahren, ausgeführt von einer kumulativen Höhenberechnungsvorrichtung (100), die einen atmosphärischen Drucksensor (40) einschließt, wobei das Verfahren Folgendes umfasst:
Erfassen von atmosphärischen Druckdaten von dem atmosphärischen Drucksensor (40);
Berechnen einer ersten kumulativen Höhe aus den erfassten atmosphärischen Druckdaten;
Berechnen einer zweiten kumulativen Höhe aus den erfassten atmosphärischen Druckdaten;
Bestimmen, aus den erfassten atmosphärischen Druckdaten, ob ein aktueller Zustand ein erster Zustand oder ein zweiter Zustand ist; und
Ableiten, in Übereinstimmung mit dem bestimmten aktuellen Zustand und basierend auf der ersten kumulativen Höhe und der zweiten kumulativen Höhe, einer kumulativen Höhe,
**dadurch gekennzeichnet, dass**
das Berechnen der ersten kumulativen Höhe Folgendes einschließt
Glätten der erfassten atmosphärischen Druckdaten unter Verwendung eines ersten Glättungsfilters (121), der ein Tiefpassfilter mit einer Grenzfrequenz ist, die eine erste Frequenz ist,
Bestimmen, aus den atmosphärischen Druckdaten, die durch den ersten Glättungsfilter (121) geglättet wurden, einer Aufstiegs-/Abstiegsrichtung in einer ersten Periode für jeden ersten Zyklus und Aufzeichnen einer ersten Höhenänderung, und
Berechnen eines Aufstiegs-/Abstiegsdifferenzwertes in dem ersten Zyklus und Berechnen der ersten kumulativen Höhe basierend auf der bestimmten Aufstiegs-/Abstiegsrichtung und dem berechneten Aufstiegs-/Abstiegsdifferenzwert,
wobei das Berechnen der zweiten kumulativen Höhe Folgendes einschließt
Glätten der erfassten atmosphärischen Druckdaten unter Verwendung eines zweiten Glättungsfilters (131), der ein Tiefpassfilter mit einer Grenzfrequenz ist, die niedriger als die erste Frequenz ist,
Bestimmen, aus den atmosphärischen Druckdaten, die durch den zweiten Glättungsfilter (131) geglättet wurden, einer Aufstiegs-/Abstiegsrichtung in einer zweiten Periode, die größer als die erste Periode ist, für jeden zweiten Zyklus, der größer als der erste Zyklus ist, und Aufzeichnen einer zweiten Höhenänderung, und
Berechnen eines Aufstiegs-/Abstiegsdifferenzwertes in dem zweiten Zyklus und Berechnen der zweiten kumulativen Höhe basierend auf der bestimmten Aufstiegs-/Abstiegsrichtung und dem berechneten Aufstiegs-/Abstiegsdifferenzwert, und
wobei das Bestimmen des aktuellen Zustands das Bestimmen, dass der aktuelle Zustand der erste Zustand in einem Fall ist, in dem eine Aufstiegs-/Abstiegswechselfrequenz in der Aufzeichnung der ersten Höhenänderung kleiner als eine vorbestimmte Referenz ist, und Bestimmen, dass der aktuelle Zustand der zweite Zustand in einem Fall ist, in dem die Aufstiegs-/Abstiegswechselfrequenz in der Aufzeichnung der ersten Höhenänderung größer als die vorbestimmte Referenz ist, einschließt.

9. Kumulatives Höhenberechnungsverfahren nach Anspruch 8, wobei
in einem Fall, in dem bei dem Bestimmen des aktuellen Zustands der aktuelle Zustand als der erste Zustand bestimmt wird, das Ableiten der kumulativen Höhe das Verwenden, als die kumulative Höhe, einschließt, was immer größer ist von der ersten kumulativen Höhe und der zweiten kumulativen Höhe, und
in einem Fall, in dem bei dem Bestimmen des aktuellen Zustands der aktuelle Zustand als der zweite Zustand bestimmt wird, das Ableiten der kumulativen Höhe das Verwenden der zweiten kumulativen Höhe als die kumulative Höhe einschließt.

10. Kumulatives Höhenberechnungsverfahren nach Anspruch 8 oder 9, wobei in einem Fall, in dem bei dem Bestimmen des aktuellen Zustands der aktuelle Zustand als der zweite Zustand bestimmt wird, bei dem Ableiten der kumulativen Höhe die Berechnung bei dem Berechnen der ersten kumulativen Höhe unterbrochen wird und, in einem Fall, in dem eine Bestimmung gemacht wird, dass eine zweite kumulative Höhe bei dem Berechnen der zweiten kumulativen Höhe gleich oder größer ist als eine erste kumulative Höhe bei dem Berechnen der ersten kumulativen Höhe, die Berechnung bei dem Berechnen der ersten kumulativen Höhe neu gestartet wird.

11. Programm, ausführbar von einem oder mehreren Prozessoren (10) in einer kumulativen Höhenberechnungsvorrichtung (100), die einen atmosphärischen Drucksensor (40) einschließt,
wobei das Programm den einen oder die mehreren Prozessoren (10) veranlasst, Folgendes durchzuführen:
eine Erfassung von atmosphärischen Druckdaten von dem atmosphärischen Drucksensor (40),
eine Berechnung der ersten kumulativen Höhe aus den erfassten atmosphärischen Druckdaten,
eine Berechnung einer zweiten kumulativen Höhe aus den erfassten atmosphärischen Druckdaten,
eine Bestimmung, aus den erfassten atmosphärischen Druckdaten, ob ein aktueller Zustand ein erster Zustand oder ein zweiter Zustand ist, und
eine Ableitung, in Übereinstimmung mit dem bestimmten aktuellen Zustand und basierend auf der ersten kumulativen Höhe und der zweiten kumulativen Höhe, einer kumulativen Höhe,
wobei die kumulative Höhenberechnungsvorrichtung (100) **dadurch gekennzeichnet ist, dass**
das Berechnen der ersten kumulativen Höhe Folgendes einschließt
Glätten der erfassten atmosphärischen Druckdaten unter Verwendung eines ersten Glättungsfilters (121), der ein Tiefpassfilter mit einer Grenzfrequenz ist, die eine erste Frequenz ist,
Bestimmen, aus den atmosphärischen Druckdaten, die durch den ersten Glättungsfilter (121) geglättet wurden, einer Aufstiegs-/Abstiegsrichtung in einer ersten Periode für jeden ersten Zyklus und Aufzeichnen einer ersten Höhenänderung, und
Berechnen eines Aufstiegs-/Abstiegsdifferenzwertes in dem ersten Zyklus und Berechnen der ersten kumulativen Höhe basierend auf der bestimmten Aufstiegs-/Abstiegsrichtung und dem berechneten Aufstiegs-/Abstiegsdifferenzwert,
wobei das Berechnen der zweiten kumulativen Höhe Folgendes einschließt
Glätten der erfassten atmosphärischen Druckdaten unter Verwendung eines zweiten Glättungsfilters (131), der ein Tiefpassfilter mit einer Grenzfrequenz ist, die niedriger als die erste Frequenz ist,
Bestimmen, aus den atmosphärischen Druckdaten, die durch den zweiten Glättungsfilter (131) geglättet wurden, einer Aufstiegs-/Abstiegsrichtung in einer zweiten Periode, die größer als die erste Periode ist, für jeden zweiten Zyklus, der größer als der erste Zyklus ist, und Aufzeichnen einer zweiten Höhenänderung, und
Berechnen eines Aufstiegs-/Abstiegsdifferenzwertes in dem zweiten Zyklus und Berechnen der zweiten kumulativen Höhe basierend auf der bestimmten Aufstiegs-/Abstiegsrichtung und dem berechneten Aufstiegs-/Abstiegsdifferenzwert, und
wobei das Bestimmen des aktuellen Zustands das Bestimmen, dass der aktuelle Zustand der erste Zustand in einem Fall ist, in dem eine Aufstiegs-/Abstiegswechselfrequenz in der Aufzeichnung der ersten Höhenänderung kleiner ist als eine vorbestimmte Referenz, und das Bestimmen, dass der aktuelle Zustand der zweite Zustand in einem Fall ist, in dem die Aufstiegs-/Abstiegswechselfrequenz in der Aufzeichnung der ersten Höhenänderung größer als die vorbestimmte Referenz ist, einschließt.

12. Programm nach Anspruch 11, wobei,
in einem Fall, in dem bei der Bestimmung des aktuellen Zustands der aktuelle Zustand als der erste Zustand bestimmt wird, die Ableitung der kumulativen Höhe die Annahme, als die kumulative Höhe, einschließt, was immer größer ist aus der ersten kumulativen Höhe und der zweiten kumulativen Höhe, und
in einem Fall, in dem bei der Bestimmung des aktuellen Zustands der aktuelle Zustand als der zweite Zustand bestimmt wird, die Ableitung der kumulativen Höhe die Annahme der zweiten kumulativen Höhe als die kumulative Höhe einschließt.

13. Programm nach Anspruch 11 oder 12, wobei in einem Fall, in dem bei der Bestimmung des aktuellen Zustands der aktuelle Zustand als der zweite Zustand bestimmt wird, bei der Ableitung der kumulativen Höhe die Berechnung bei der Berechnung der ersten kumulativen Höhe unterbrochen wird und in einem Fall, in dem eine Bestimmung gemacht wird, dass eine zweite kumulative Höhe bei der Berechnung der zweiten kumulativen Höhe gleich oder größer ist als eine erste kumulative Höhe bei der Berechnung der ersten kumulativen Höhe, wird die Berechnung bei der Berechnung der ersten kumulativen Höhe neu gestartet.

## Revendications

1. Dispositif (100) de calcul d'altitude cumulative, comprenant :
un capteur de pression atmosphérique (40) ;
une mémoire (20, 30) ; et
un ou plusieurs processeurs (10), dans lequel
les un ou plusieurs processeurs (10) exécutent le traitement suivant conformément à des instructions stockées dans la mémoire (20, 30) :
l'acquisition de données de pression atmosphérique à partir du capteur de pression atmosphérique (40),
le calcul d'une première altitude cumulative à partir des données de pression atmosphérique acquises,
le calcul d'une deuxième altitude cumulative à partir des données de pression atmosphérique acquises,
le fait de déterminer, à partir des données de pression atmosphérique acquises, si un état actuel est un premier état ou un deuxième état, et
la déduction, conformément à l'état actuel déterminé et sur la base de la première altitude cumulative et de la deuxième altitude cumulative, d'une altitude cumulative,
le dispositif (100) de calcul d'altitude cumulative est **caractérisé en ce que**
le calcul de la première altitude cumulative inclut
le lissage des données de pression atmosphérique acquises en utilisant un premier filtre de lissage (121) qui est un filtre passe-bas avec une fréquence de coupure qui est une première fréquence,
la détermination, à partir des données de pression atmosphérique lissées par le premier filtre de lissage (121), d'une direction de montée/descente dans une première période pour chaque premier cycle, et l'enregistrement d'un premier changement d'altitude, et
le calcul d'une valeur de différence de montée/descente dans le premier cycle, et le calcul de la première altitude cumulative sur la base de la direction de montée/descente déterminée et de la valeur de différence de montée/descente calculée,
le calcul de la deuxième altitude cumulative inclut
le lissage des données de pression atmosphérique acquises en utilisant un deuxième filtre de lissage (131) qui est un filtre passe-bas avec une fréquence de coupure qui est inférieure à la première fréquence,
la détermination, à partir des données de pression atmosphérique lissées par le deuxième filtre de lissage (131), d'une direction de montée/descente dans une deuxième période supérieure à la première période pour chaque deuxième cycle qui est supérieur au premier cycle, et l'enregistrement d'un deuxième changement d'altitude, et
le calcul d'une valeur de différence de montée/descente dans le deuxième cycle, et le calcul de la deuxième altitude cumulative sur la base de la direction de montée/descente déterminée et de la valeur de différence de montée/descente calculée, et
la détermination de l'état actuel inclut la détermination que l'état actuel est le premier état dans un cas où une fréquence de commutation de montée/descente dans l'enregistrement du premier changement d'altitude est inférieure à une référence prédéterminée et la détermination que l'état actuel est le deuxième état dans un cas où la fréquence de commutation de montée/descente dans l'enregistrement du premier changement d'altitude est supérieure à la référence prédéterminée.

2. Dispositif (100) de calcul d'altitude cumulative selon la revendication 1, dans lequel
dans un cas où la valeur de différence de montée/descente dans le premier cycle est supérieure à un premier seuil, le calcul de la première altitude cumulative inclut le calcul de la première altitude cumulative en utilisant la valeur de différence de montée/descente dans le premier cycle, et
dans un cas où la valeur de différence de montée/descente dans le deuxième cycle est supérieure à un deuxième seuil plus petit que le premier seuil, le calcul de la deuxième altitude cumulative inclut le calcul de la deuxième altitude cumulative en utilisant la valeur de différence de montée/descente dans le deuxième cycle.

3. Dispositif (100) de calcul d'altitude cumulative selon la revendication 1 ou la revendication 2, dans lequel
dans un cas où, lors de la détermination de l'état actuel, l'état actuel est déterminé comme étant le premier état, la déduction de l'altitude cumulative inclut l'utilisation, en tant qu'altitude cumulative, de celle qui est la plus grande parmi la première altitude cumulative et la deuxième altitude cumulative, et
dans un cas où, lors de la détermination de l'état actuel, l'état actuel est déterminé comme étant le deuxième état, la déduction de l'altitude cumulative inclut l'utilisation de la deuxième altitude cumulative en tant qu'altitude cumulative.

4. Dispositif (100) de calcul d'altitude cumulative selon la revendication 1 ou la revendication 2, dans lequel dans un cas où, lors de la détermination de l'état actuel, un passage du premier état au deuxième état est déterminé, la déduction de l'altitude cumulative inclut l'utilisation de la première altitude cumulative en tant qu'altitude cumulative jusqu'à ce que la deuxième période se soit écoulée après commutation du premier état au deuxième état.

5. Dispositif (100) de calcul d'altitude cumulative selon la revendication 1 ou la revendication 2, dans lequel
dans un cas où, lors de la détermination de la direction de montée/descente dans la première période, on détermine de manière continue que la direction de montée/descente est une direction de montée ou une direction de descente, le calcul de la première altitude cumulative inclut l'addition des valeurs de différence de montée/descente d'intervalles dans lesquels la direction de montée/descente est déterminée de manière continue comme étant la direction de montée ou la direction de descente, et la conservation d'un résultat comme étant le changement continu d'altitude,
dans un cas où, lors de la détermination de la direction de montée/descente dans la première période, on détermine que la direction de montée/descente change, passant de la direction de montée à la direction de descente ou de la direction de descente à la direction de montée, le calcul de la première altitude cumulative inclut la réinitialisation du changement continu d'altitude, et
dans un cas où, lors de la détermination de l'état actuel, on détermine que l'état actuel est le deuxième état, dans un cas où, lors de la déduction de l'altitude cumulative, le changement continu d'altitude dépasse un seuil prédéterminé, la première altitude cumulative est utilisée comme altitude cumulative.

6. Dispositif (100) de calcul d'altitude cumulative selon la revendication 5, dans lequel dans un cas où, lors de la détermination de la direction de montée/descente dans la première période, les intervalles dans lesquels la direction de montée/descente est déterminée de manière continue comme étant une direction de terrain plat dépassent un seuil prédéterminé, le calcul de la première altitude cumulative inclut la réinitialisation du changement continu d'altitude.

7. Dispositif (100) de calcul d'altitude cumulative selon l'une quelconque des revendications 1 à 3, dans lequel dans un cas où, lors de la détermination de l'état actuel, l'état actuel est déterminé comme étant le deuxième état, lors de la déduction de l'altitude cumulative, le calcul lors du calcul de la première altitude cumulative est interrompu et, dans un cas où on détermine qu'une deuxième altitude cumulative lors du calcul de la deuxième altitude cumulative est supérieure ou égale à une première altitude cumulative lors du calcul de la première altitude cumulative, le calcul lors du calcul de la première altitude cumulative reprend.

8. Procédé de calcul d'altitude cumulative mis en œuvre par un dispositif (100) de calcul d'altitude cumulative incluant un capteur de pression atmosphérique (40), le procédé comprenant :
l'acquisition de données de pression atmosphérique à partir du capteur de pression atmosphérique (40) ;
le calcul d'une première altitude cumulative à partir des données de pression atmosphérique acquises ;
le calcul d'une deuxième altitude cumulative à partir des données de pression atmosphérique acquises ;
le fait de déterminer, à partir des données de pression atmosphérique acquises, si un état actuel est un premier état ou un deuxième état ;
la déduction, conformément à l'état actuel déterminé et sur la base de la première altitude cumulative et de la deuxième altitude cumulative, d'une altitude cumulative,
**caractérisé en ce que**
le calcul de la première altitude cumulative inclut
le lissage des données de pression atmosphérique acquises en utilisant un premier filtre de lissage (121) qui est un filtre passe-bas avec une fréquence de coupure qui est une première fréquence,
la détermination, à partir des données de pression atmosphérique lissées par le premier filtre de lissage (121), d'une direction de montée/descente dans une première période pour chaque premier cycle, et l'enregistrement d'un premier changement d'altitude, et
le calcul d'une valeur de différence de montée/descente dans le premier cycle, et le calcul de la première altitude cumulative sur la base de la direction de montée/descente déterminée et de la valeur de différence de montée/descente calculée,
le calcul de la deuxième altitude cumulative inclut
le lissage des données de pression atmosphérique acquises en utilisant un deuxième filtre de lissage (131) qui est un filtre passe-bas avec une fréquence de coupure qui est inférieure à la première fréquence,
la détermination, à partir des données de pression atmosphérique lissées par le deuxième filtre de lissage (131), d'une direction de montée/descente dans une deuxième période supérieure à la première période pour chaque deuxième cycle qui est supérieur au premier cycle, et l'enregistrement d'un deuxième changement d'altitude, et
le calcul d'une valeur de différence de montée/descente dans le deuxième cycle, et le calcul de la deuxième altitude cumulative sur la base de la direction de montée/descente déterminée et de la valeur de différence de montée/descente calculée, et
la détermination de l'état actuel inclut la détermination que l'état actuel est le premier état dans un cas où une fréquence de commutation de montée/descente dans l'enregistrement du premier changement d'altitude est inférieure à une référence prédéterminée et la détermination que l'état actuel est le deuxième état dans un cas où la fréquence de commutation de montée/descente dans l'enregistrement du premier changement d'altitude est supérieure à la référence prédéterminée.

9. Procédé de calcul d'altitude cumulative selon la revendication 8, dans lequel
dans un cas où, lors de la détermination de l'état actuel, l'état actuel est déterminé comme étant le premier état, la déduction de l'altitude cumulative inclut l'utilisation, en tant qu'altitude cumulative, de celle qui est la plus grande parmi la première altitude cumulative et la deuxième altitude cumulative, et
dans un cas où, lors de la détermination de l'état actuel, l'état actuel est déterminé comme étant le deuxième état, la déduction de l'altitude cumulative inclut l'utilisation de la deuxième altitude cumulative en tant qu'altitude cumulative.

10. Procédé de calcul d'altitude cumulative selon la revendication 8 ou la revendication 9, dans lequel dans un cas où, lors de la détermination de l'état actuel, l'état actuel est déterminé comme étant le deuxième état, lors de la déduction de l'altitude cumulative, le calcul lors du calcul de la première altitude cumulative est interrompu et, dans un cas où on détermine qu'une deuxième altitude cumulative lors du calcul de la deuxième altitude cumulative est supérieure ou égale à une première altitude cumulative lors du calcul de la première altitude cumulative, le calcul lors du calcul de la première altitude cumulative reprend.

11. Programme exécutable par un ou plusieurs processeurs (10) dans un dispositif (100) de calcul d'altitude cumulative incluant un capteur de pression atmosphérique (40),
le programme amenant les un ou plusieurs processeurs (10) à effectuer :
une acquisition de données de pression atmosphérique à partir du capteur de pression atmosphérique (40),
un calcul de la première altitude cumulative à partir des données de pression atmosphérique acquises,
un calcul d'une deuxième altitude cumulative à partir des données de pression atmosphérique acquises,
un fait de déterminer, à partir des données de pression atmosphérique acquises, si un état actuel est un premier état ou un deuxième état, et
une déduction, conformément à l'état actuel déterminé et sur la base de la première altitude cumulative et de la deuxième altitude cumulative, d'une altitude cumulative,
le dispositif (100) de calcul d'altitude cumulative est **caractérisé en ce que**
le calcul de la première altitude cumulative inclut
le lissage des données de pression atmosphérique acquises en utilisant un premier filtre de lissage (121) qui est un filtre passe-bas avec une fréquence de coupure qui est une première fréquence,
la détermination, à partir des données de pression atmosphérique lissées par le premier filtre de lissage (121), d'une direction de montée/descente dans une première période pour chaque premier cycle, et l'enregistrement d'un premier changement d'altitude, et
le calcul d'une valeur de différence de montée/descente dans le premier cycle, et le calcul de la première altitude cumulative sur la base de la direction de montée/descente déterminée et de la valeur de différence de montée/descente calculée,
le calcul de la deuxième altitude cumulative inclut
le lissage des données de pression atmosphérique acquises en utilisant un deuxième filtre de lissage (131) qui est un filtre passe-bas avec une fréquence de coupure qui est inférieure à la première fréquence,
la détermination, à partir des données de pression atmosphérique lissées par le deuxième filtre de lissage (131), d'une direction de montée/descente dans une deuxième période supérieure à la première période pour chaque deuxième cycle qui est supérieur au premier cycle, et l'enregistrement d'un deuxième changement d'altitude, et
le calcul d'une valeur de différence de montée/descente dans le deuxième cycle, et le calcul de la deuxième altitude cumulative sur la base de la direction de montée/descente déterminée et de la valeur de différence de montée/descente calculée, et
la détermination de l'état actuel inclut la détermination que l'état actuel est le premier état dans un cas où une fréquence de commutation de montée/descente dans l'enregistrement du premier changement d'altitude est inférieure à une référence prédéterminée et la détermination que l'état actuel est le deuxième état dans un cas où la fréquence de commutation de montée/descente dans l'enregistrement du premier changement d'altitude est supérieure à la référence prédéterminée.

12. Programme selon la revendication 11, dans lequel,
dans un cas où, lors de la détermination de l'état actuel, l'état actuel est déterminé comme étant le premier état, la déduction de l'altitude cumulative inclut l'adoption, en tant qu'altitude cumulative, de celle qui est la plus grande parmi la première altitude cumulative et la deuxième altitude cumulative, et
dans un cas où, lors de la détermination de l'état actuel, l'état actuel est déterminé comme étant le deuxième état, la déduction de l'altitude cumulative inclut l'adoption de la deuxième altitude cumulative en tant qu'altitude cumulative.

13. Programme selon la revendication 11 ou la revendication 12, dans lequel dans un cas où, lors de la détermination de l'état actuel, l'état actuel est déterminé comme étant le deuxième état, lors de la déduction de l'altitude cumulative, le calcul lors du calcul de la première altitude cumulative est interrompu et, dans un cas où on détermine qu'une deuxième altitude cumulative lors du calcul de la deuxième altitude cumulative est supérieure ou égale à une première altitude cumulative lors du calcul de la première altitude cumulative, le calcul lors du calcul de la première altitude cumulative reprend.
